(19) Europäisches Patentamt / European Patent Office / Office européen des brevets

(11) **EP 1 615 447 B1**

(12) **EUROPEAN PATENT SPECIFICATION**

(45) Date of publication and mention of the grant of the patent:
**09.03.2016 Bulletin 2016/10**

(21) Application number: **04016172.1**

(22) Date of filing: **09.07.2004**

(51) Int Cl.:
**H04N 19/172** *(2014.01)*

(54) **Method and system for delivery of coded information streams, related network and computer program product therefor**

Verfahren un System zur Ablieferung codierter Informationsströme, zugehöriges Netzwerk und Computerprogramm

Méthode et système de livraison des flux d'informations et reseau et programme informatique associés

(84) Designated Contracting States:
**DE FR GB IT**

(43) Date of publication of application:
**11.01.2006 Bulletin 2006/02**

(73) Proprietor: **STMicroelectronics Srl**
**20864 Agrate Brianza (IT)**

(72) Inventors:
• **Piccinelli, Emiliano Mario Angelo**
**20040 Cavenago di Brianza (Milano) (IT)**
• **Filippini, Gianluca**
**26900 Lodi (IT)**
• **Rovati, Fabrizio Simone**
**20092 Cinisello Balsamo (Milano) (IT)**

(74) Representative: **Bosotti, Luciano**
**Buzzi, Notaro & Antonielli d'Oulx**
**Via Maria Vittoria, 18**
**10123 Torino (IT)**

(56) References cited:
**US-A1- 2003 227 977**

• **YONGQING LIANG ET AL: "A new content-based hybrid video transcoding method" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 October 2001 (2001-10-07), pages 429-432, XP010564888 ISBN: 0-7803-6725-1**
• **YOSHIDA T ET AL: "Video transcoding based on optimal frame rate estimation" IMAGE PROCESSING, 2003. PROCEEDINGS. 2003 INTERNATIONAL CONFERENCE ON, vol. 1, 14 September 2003 (2003-09-14), pages 181-184, XP010670275**
• **SHAN LIU ET AL: "Joint temporal-spatial rate control for adaptive video transcoding" MULTIMEDIA AND EXPO, 2003. ICME '03. PROCEEDINGS. 2003 INTERNATIONAL CONFERENCE ON, vol. 2, 6 July 2003 (2003-07-06), pages 225-228, XP010650701**

**Description**

Field of the invention

The invention relates to coding techniques, for instance for video signals. The invention may be applied to the dynamic adaptation of pre-encoded video streams to an error prone wireless channel, having an available bandwidth changing in a non deterministic way, while preserving the optimal quality of the streamed content. The invention was developed by paying specific attention to the possible application to MPEG-2 coded video streams.
However, reference to this specific possible application is not to be construed.in a limiting sense of the scope of the invention.

Description of the related art

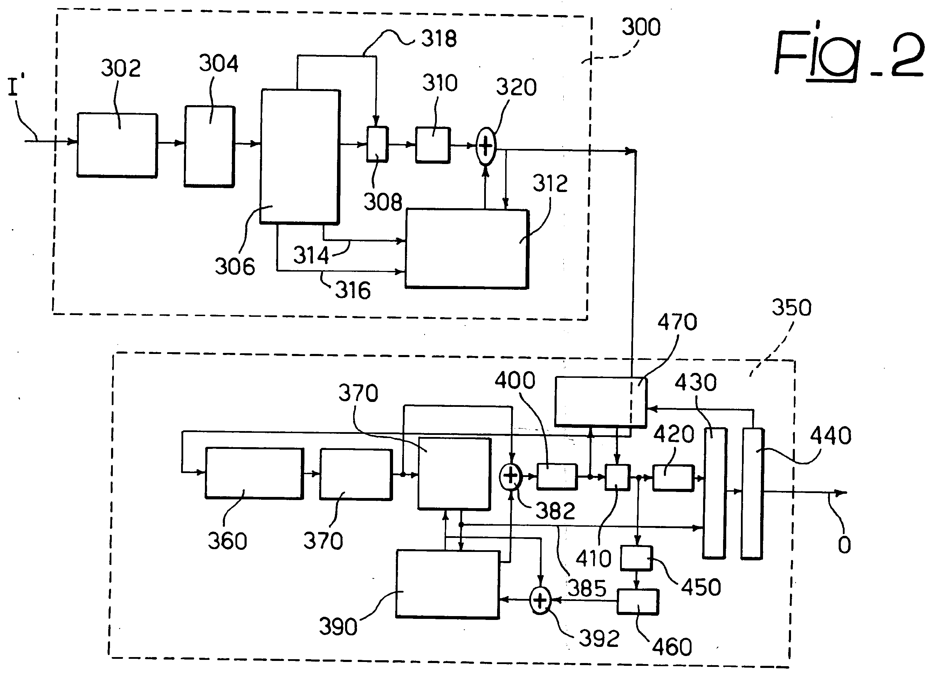

The MPEG video standard is based on a video compression procedure that exploits the high degree of spatial and temporal correlation in natural video sequences.
The MPEG standard defines the syntax and semantics of the transmitted bit-stream and the functionality of the decoder. However, the encoder is not strictly standardized: any encoder that produces a valid MPEG bit-streams is acceptable.
Motion estimation is used to compute similarities among successive pictures, in order to remove temporal redundancy, i.e. to transmit only the difference among successive pictures. In particular, Block Matching Motion Estimation (BM-ME) is a common way to extract the similarities among pictures and it is the method selected by the MPEG-2 standard.

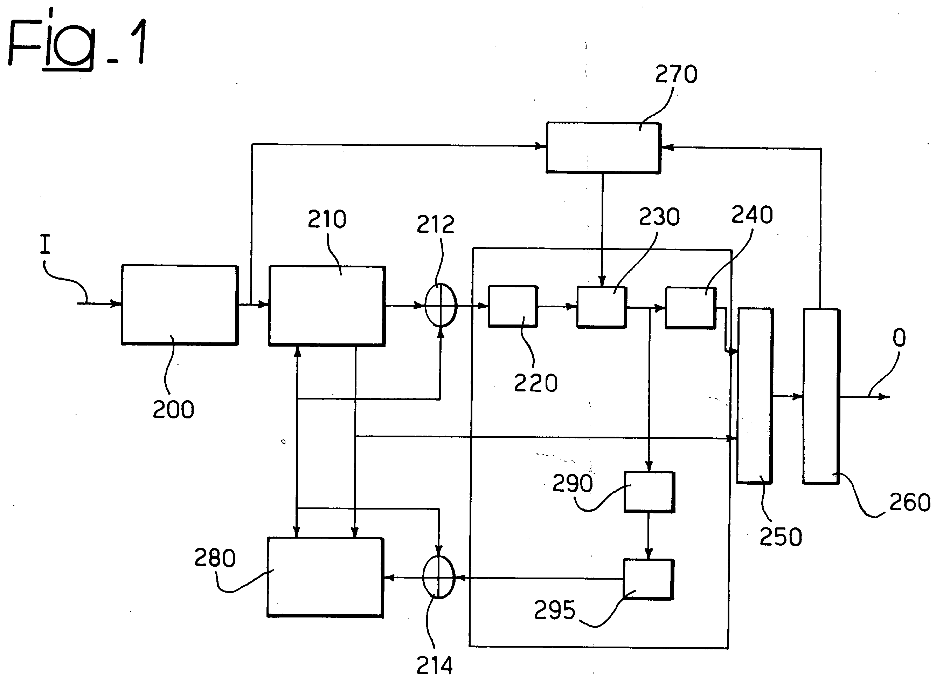

Figure 1 shows an example of a hybrid Differential Pulse Code Modulation / Discrete Cosine Transform (DPCM/DCT)) coding loop (MPEG encoder).
Such an encoder system removes temporal redundancy from the video Input Sequence, indicated with reference I, which is initially elaborated by a Frame Reorder block 200. Temporal redundancy is then removed in a block 210 that performs an inter-frame Motion Estimation (ME) operation.
A summation node 212 operates on the output signal coming from the Motion Estimation block 210, and also receives a signal representative of a previous picture coming from a block 280 that represents the Anchor Frames Buffer.
The residual error images, obtained as output of the summation node 212, are further processed by a block 220 in which a Discrete Cosine Transform (DCT) operation is performed, which reduces spatial redundancy by de-correlating the pixels within a block and concentrating the energy of the block itself into a few low order coefficients.
Finally, blocks 230 and 240, representing respectively a Scalar Quantization (Quant) operation and a Variable Length Coding (VLC) operation, produce a bit-stream with good statistical compression efficiency.
The quantized sequence outgoing from block 230, is also fed to an Inverse Quantization (IQ) block 290, and followed by a cascaded Inverse Discrete Cosine Transform (IDCT) block 295.
Due to the intrinsic structure of MPEG standard, the final bit-stream outputted by the Variable Length Coding block 240 is produced at variable bit-rate; hence, it has to be transformed to constant bit-rate by the insertion of a suitable Multiplexer 250 and an Output Buffer 260. Such an Output Buffer 260 feeds a control signal to a Feedback Bit-rate Controller, which decides the granularity of scalar quantization applied in the Scalar Quantization block 230.
The Multiplexer 250 works on bit-stream signals coming from the Variable Length Coding block 240 and Motion Estimation block 210.
A block 270 represents the already mentioned Feedback Bit-rate Controller and elaborates signals coming from Frame Reorder block 200 and Output Buffer block 260. The output signal from the Feedback Bit-rate Controller 270 is fed to the Quantization block 230. As mentioned, block 280 represents the Anchor Frames Buffer, which receives and elaborates inputs coming from Motion Estimation block 210 and from the summation node 214. The summation node 214 sums signals coming from the Anchor Frame Buffer block 280 and Inverse Discrete Cosine Transform (IDCT) block 295. The signal coming from the Anchor Frame Buffer block 280 is obtained from the motion vectors calculated by the Motion Estimation block 210.
Finally, the Output MPEG Bit Stream of this encoder is indicated O in Figure 2.
The coding technique just described must be considered in view of the fact that, in recent times, it has become increasingly important to be able to adapt the multimedia content to the client devices, and it widens increasingly the range of transformations needed.
A general access to the Multimedia content can be provided in two basic ways; the first is by storing, managing, selecting, and delivering different versions of the media objects (images, video, audio, graphics and text) that include the multimedia presentations.
The second is by manipulating the media objects on the fly, by using, for example, methods for text-to-speech translation, image and video transcoding, media conversion, and summarization. This allows for adapting the multimedia content delivery to the wide diversity of client device capabilities in communication, processing storage and display.

In both of the basic ways, the need arises of converting a compressed signal into another compressed signal format. The device that, performs such an operation is called a transcoder. Such a device could be placed in the network to help relaying transmissions between these different bit rates or could be used as a pre-processing tool to create the various versions of the media objects that were mentioned earlier.

By way of example, one may consider the case of a user that desires to watch a Digital Video Disk (DVD) movie, that is MPEG-2 encoded at 8 Mbit/s at standard definition (Main Profile at Main Level), by using a portable wireless device assisted by a Common Intermediate Format (CIF) display.

In order to allow vision of such a movie, a MPEG-2 decoding has to take place, the picture resolution must be changed from standard to Common Intermediate Format, and then again the movie must be MPEG encoded. The resulting bit-stream can be transmitted over a limited bandwidth error-prone channel, received by the portable device and decoded for related display.

The main issue is, therefore, to adapt the bit-rate and the picture resolution of a compressed data stream compliant to a video standard (e.g. MPEG-2) to another one. The most widely adopted procedure is to decode the incoming bit-stream, optionally downsampling the decoded images to generate a sequence with a reduced picture size, and re-encode with a new encoder, suitably set for achieving the required bit-rate.

Figure 2 shows a block diagram of a transcoding chain, where reference numeral 300 indicates a sequence of blocks collectively named MPEG decoder and reference numeral 350 indicates a sequence of blocks collectively named MPEG encoder.

As shown in figure 2, a video Input Bit-stream I', representing information in the form of MPEG coded frames, is led to the MPEG decoder 300. Specifically, such video Input Bit-stream I' is first fed to a Headers Detection block 302. The signal coming from the Headers Detection block 302 is then fed to a Buffer block 304 to be subsequently processed by a Demultiplexer Variable Length Coding Run-level Decoder block indicated with reference 306 in figure 2.

The processed signal from the block 306 is sent to an Inverse Quantization block 308, with a Quantization level 318 extracted by the same block 306, to be then fed to an Inverse Discrete Cosine Transform block 310. Block 312 represents an Anchor Frame Buffer that operates by exploiting Motion Vector Values 314 and a Motion Vector Modes 316 that receives as input signals, originated from the Decoder block 306.

The output signal from the Anchor Frame Buffer 312 is in turn fed to a summation node 320 that receives also the processed signal from the Inverse Discrete Cosine Transform block 310. The output signal from the summation node 320 is then fed to the MPEG encoder 350, and also fed back to the Anchor Frame Buffer 312.

The overall scheme of the MPEG encoder block 350 is substantially analogous to the scheme of the encoder 200 shown in figure 1, but the signal outputted from the MPEG decoder block 300 is here sent preliminarily to a Chroma Filtering block 360. The filtered signal coming from block 360 is then sent to a Frame Reorder block 370, and a cascaded Motion Estimation block 380. The Motion Vectors 385 originated from such Motion Estimation block 380 are fed to an Anchor Frame Buffer block 390 and to a Multiplexer 430.

The signal coming from the Anchor Frame Buffer 390 is fed to two summation nodes, 382 and 392, and fed back to the Motion Estimation block 380.

The summation node 382 receives signals from the Frame Reorder block 370 and from the Anchor Frame Buffer block 390. The output signal from the summation node 382 is fed to a Discrete Cosine Transform block 400 to be subsequently quantized in a Quantizer block 410. The quantized signal from the block 410 is fed to a Variable Length Coding block 420 and to an Inverse Quantizer block 450.

The signal coming out from Variable Length Coding block 420 is fed to a Multiplexer 430. The multiplexed signal is in turn fed to an Output Buffer 440 that returns the Output MPEG Bit-stream O. The output signal from the block 440 is also fed to a Feedback Bit-rate Controller 470, that controls the Quantizer block 410.

The signal generated from the Inverse Quantizer block 450 is fed to an Inverse Discrete Cosine Transform block 460. The inverse transformed signal from block 460 is fed to the summation node 392. The output signal from the summation node 392 is fed to Anchor Frame Buffer block 390.

To perform the transcoding procedure above outlined alternative methods have been developed, that are able to operate directly in the Discrete Cosine Transform domain, joining together the decoder and the encoder, and reusing the available useful information, like for example, motion vectors: these systems are able to remove the unnecessary redundancies present in the system.

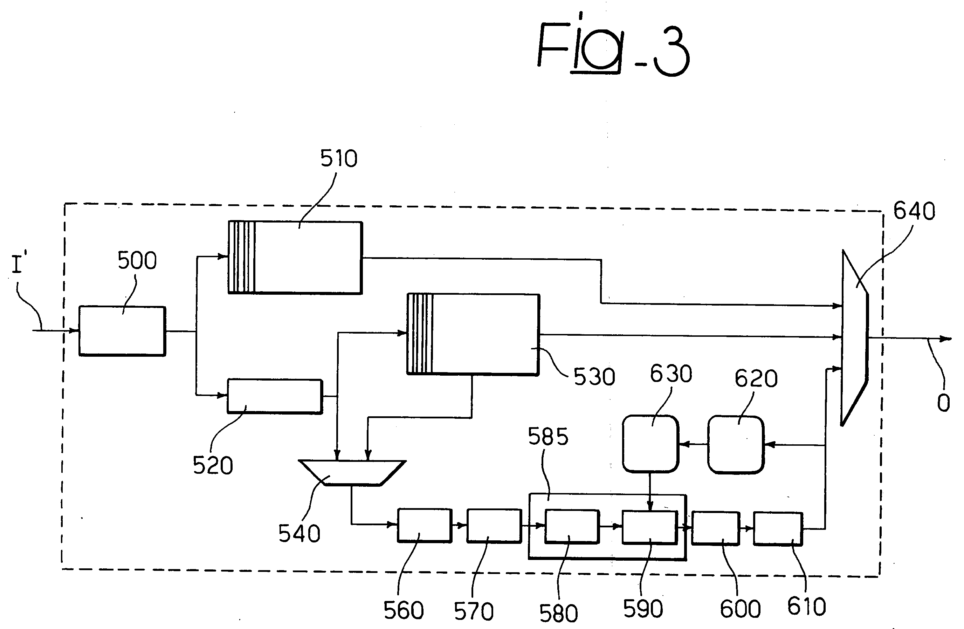

Figure 3 shows an example of such a transcoder system. The video Input Bit-stream indicated with reference I' is fed to a Sequence & Group Of Pictures headers block 500 that separates the signal feeding the a Sequence & Group Of Pictures Data delay memory block 510 and a Picture Header block 520.

The output signal from block 520 is fed to a Local Cache memory block 530. A Multiplexer 540 operates on signals coming from block 520 and from block 530. The multiplexed signal from block 540 is fed to an Inverse-Variable Length Coding block 560. The signal coming from block 560 is fed to an Inverse-Run Length block 570. The resultant output signal is fed to a Requantizer block 585 that is made up with an Inverse Quantizer block 580 followed by a Quantizer block 590. The signal from block 585 is fed to a Run Length block 600 followed by a Variable Length Coding block 610. The output signal form block 610 is fed to a Bit Usage Profile block 620 followed by a Rate Control block 630 that controls the Quantizer block 590.

Finally, the Multiplexer 640 elaborates the signals from the block 510, the block 530 and the block 610 and returns the Output Bit-stream O.

Conventional systems always provide, as in the transcoder just described with reference to figure 3, a de-quantization followed by a re-quantization step, together with an output rate control step.

Such a kind of system is able to operate only on a single level of transcoding. In order to operate with more levels, additional complexity should be included in the system.

In particular, as described with reference to the encoder of Figure 2, explicit transcoding is a long and complex sequential chain, and involves various sources of inefficiency, because the motion information coming from the source stream is completely discarded. The transcoder shown in Figure 3, instead, is able to reuse inasmuch as possible the incoming information, to the expense of losses in terms of output bit-rate precision and drift being introduced.

Solutions as depicted in the foregoing are disclosed by published patents WO03047264, WO03047265, EP1374593, EP1231794, EP1294195, and by European patent applications n. 04007275 and n. 03002443 in the name of the Applicant.

From published patent WO02080518 is known a system for simultaneous transmission of multiple media streams in a fixed bandwidth network, wherein a state machine detects if the network bandwidth is close to saturation and executes a process of selecting at least one stream as a target for lowering total bandwidth usage. In one embodiment, the amount of data is reduced by a gradual degradation of the precision of the data, resulting in a greater potential for data compression, and/or by gradually reducing the resolution of the data of the target stream.

**The publication** Yongqing Liang at al. "A new content-based hybrid video transcoding method", International Conference on Image Processing 2001 Proceedings, vol. 1, 8, pp. 429-432, **used as a model for the preambles of the annexed independent claims, discloses a transcoding method envisaging the use of measurements of the temporal complexity and of the spatial activity. Such transcoding method provides for operating decisions about the transcoding parameters to be used of comparison of such measurements to arbitrary and static thresholds.**

Object and summary of the invention

The object of the present invention is thus to provide a method for dynamically adapting pre-encoded video streams to an error prone wireless channel, in which the available bandwidth changes in nondeterministic way, by matching the available bandwidth and preserving at the same time the optimal quality of the streamed content.

According to the present invention, that object is achieved by means of a method having the features set forth in the claims that follow. The invention also relates to a corresponding system, a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The arrangement described herein proposes a method that, substantially, provides for operating on a plurality of complexity levels, in particular four, and for choosing the best level among such a plurality of complexity levels by evaluating the available output bit rate and the complexity of the incoming compressed sequence. Such an evaluation is based on the available information contained in the incoming bit-stream, like the motion vector fields and the error level.

In particular, a scenario where a home access point is connected with several mobile wireless terminals is considered.

Adaptive video transcoding capabilities are becoming more and more important in a broad range of applications in the consumer electronics field; the proposed method be easily applied in such field, enhancing the performances of the transcoding system.

The proposed method enhances the quality achievable by a system able to transcode from one (or a plurality of) multimedia stream to another one (or a plurality of), introducing very little computational complexity. The arrangement described herein thus allows for deciding among re-quantization, frame rate down-sampling, frame size down-sampling procedures, that are very easy to be implemented, and allows the system to achieve better final quality, avoiding the drawbacks of the prior art.

Brief description of the annexed drawings

The invention will now be described, by way of example only, with reference to the enclosed figures of drawing, wherein:

- Figure 1 shows a block diagram of an MPEG encoder system,
- Figure 2 shows a block diagram of an explicit transcoding chain,
- Figure 3 shows a block diagram of a transcoder, and
- Figure 4 shows a basic block diagram of a typical Wireless Home Network scenario,
- Figure 5 shows a diagram representative of a 1 transcoding adaptation procedure according to the invention.

Detailed description of preferred embodiments of the invention

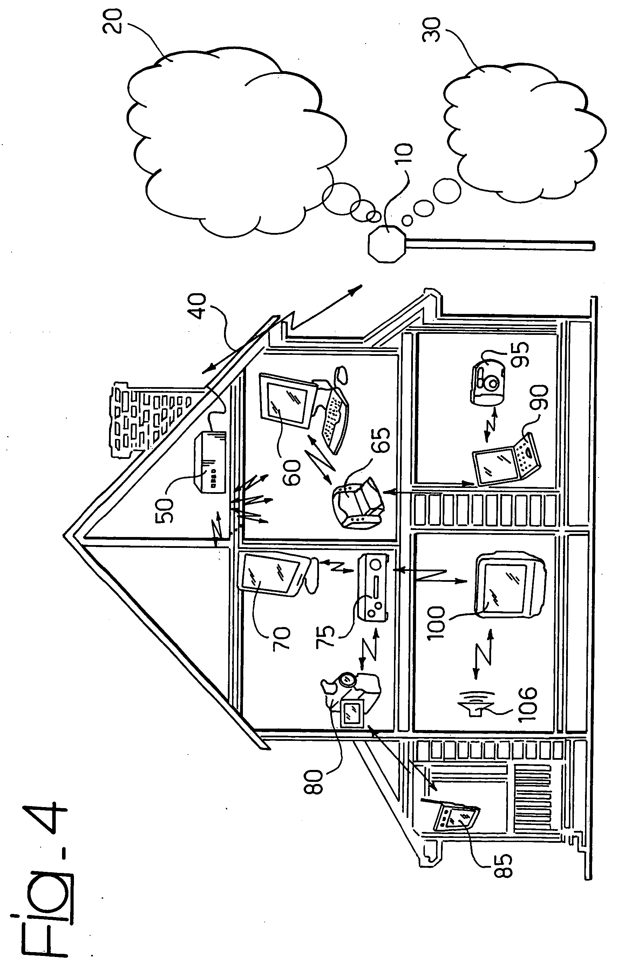

A scenario where a home access point is connected with several mobile wireless terminals is shown in Figure 4. Figure 4 shows a home access point 10 connected with a Wide Area Cellular Network 20 and with an Internet network 30. The home access point 10 is connected, by means of a Wireless Bridge 40, with a Gateway 50. The Gateway 50 is in turn connected with several mobile terminals, like: Desktop Computer 60, Printer 65, Monitor device 70, Digital Video Disk (DVD) reader 75, Camcorder 80, Personal Digital Assistant (PDA) 85, Laptop Computer 90, Digital Camera 95, TV device 100, and Audio device 105.

The available bandwidth for an 802.11a/b/g/n wireless LAN card is nominally 11 (11b), 54 (11a and 11g), >100 (11n) Mbit/s respectively, but, depending on the number of active cards, the relative motions between server and clients and the obstacles between them, the real channel bandwidth could be reduced down to hundreds of Kbits per seconds. For this reason, there is the necessity to find a way to modify dynamically the incoming content to the variable transmission conditions.

The transcoder, as seen with reference to figure 2 and 3, is a system able to convert a MPEG high quality compressed video stream into another one, that is less bandwidth consuming, through a dynamic re-quantization performed in the compressed domain. However dynamic re-quantization is not able to achieve compression bit rates lower than few Mbit/sec at full resolution with acceptable quality, because of the limitation of the standard and the intrinsic complexity of the task.

In order to overcome such limitations a method of controlling a network is proposed that operates at a plurality of transcoding levels, in particular at four different levels of complexity. The proposed method provides for choosing the best level depending on the available output bit rate and the complexity of the incoming compressed sequence, i.e. basing the choice on the available information contained in the stream, like the motion vector fields and the error level.

In a preferred embodiment, the four level of transcoding are the following:

- full resolution, full frame rate
- full resolution, reduced frame rate
- reduced resolution, full frame rate
- reduced resolution, reduced frame rate

The resolution is varied by spatial downsampling, i.e. frame size downsampling, whereas the frame rate is varied by temporal downsampling.

Each of such levels can furthermore include sublevels. Each sublevel is characterized by a different quantization parameter. In other words, the method described herein is able to change the frame size (full or reduced), frame rate (full or reduced) and quantization parameter (the whole MPEG-2 range).

It must be noted that methods for transcoding a MPEG-2 stream changing bit rate, operating on quantization level and frame rate, are known per se from the prior art.

In particular, when a MPEG-2 stream is considered, such a stream generally contains I, P and B pictures.

I pictures are coded with reference to no other picture, so are self-decodable.

P pictures are instead coded starting from a Prediction coming from the previous I or P pictures.

B pictures are generally coded starting from one previous I or P picture, and one following I or P picture. B picture cannot be taken as reference for other picture.

Assuming that the standard sequence of picture type for transmission is IBB PBB PBB PBB, repeated, it can be seen that a frame rate reduction to one third can be obtained by just dropping the bits relating to the B pictures. More complex frame rate reduction processes can be envisaged by people skilled in the art, including partial decoding of the pictures.

The method proposed, however, deals with procedures for using the above mentioned transcoding processes to dynamically adapt the stream to instantaneous channel bandwidth variations.

In the European patent application n. 04007275.3 in the name of the same Applicant, it is disclosed a method for measuring in real time the network bandwidth variations, so it can be possible to have an exact estimation of the channel conditions. The results about the channel conditions obtained by such a method can be used as input values for selecting the use of the transcoding levels and the extent of their use.

The proposed method, as mentioned above, envisages down-sampling operations for reducing both the frame rate and the frame size. This arises from the observation that, if the quantizer values is increased in order to decrease the bit-rate or bandwidth, above a certain value of compression factor/quantizer, it is better, in terms of perceived quality by the user, to watch a sequence that is reduced in frame size and/or frame rate, but less quantized, rather than a full size and/or frame rate sequence that undergoes a heavy coarse quantization.

The proposed method, further, in order to optimize the visual quality at any given bit-rate, provides for operating on such three parameters, frame rate, frame size and quantizer, in a combined and adaptive manner, depending not only on the available bandwidth but also on the picture content.

At a defined quantization level, the compressed bit-stream has a variable bit-rate depending on the picture content. Conversely, different sequences coded at the same bit-rate have different perceived quality, depending on the sequence content. Therefore, a solution using fixed thresholds in terms of bit-rate for shifting frame size and rate is unsuitable and a basic control scheme, such as shown in the following example of pseudo-code, based on assigning fixed thresholds to the bandwidth, would fail to obtain the best possible visual quality given any video content and any channel condition:

```
IF(rate > Threshold 1)
THEN full_rate
ELSE reduce_rate;

IF (rate > Threshold 2)
THEN full_size
ELSE reduce_size;
```

where Threshold 1 and Threshold 2 represent rate threshold that trigger reduction of the frame rate or of the frame size respectively.

The proposed method adopt instead a strategy aimed at getting the best possible video quality in every channel condition and for every video content. Such a strategy is based on the above mentioned fact that the perceived quality is strongly dependent on a Quantization parameter Q of the stream, i.e. the more it is quantized, the less quality is left on the stream.

Control of the Quantization parameter Q, as seen for instance with reference to Figure 4, is driven by the transcoder Rate Control, which select the appropriate standard Quantization Parameter Qp, depending on the video content and desired bit-rate.

The proposed method thus provides for making available a first cost function QUANTIZATION_COST, that is a function that take into account how the image has been quantized, according to the following relation:

$$\text{QUANTIZATION\_COST} = \text{H1*Qp} + \text{H2*m\_quant}$$

H1, H2 are two real numbers, and Qp and m_quant are quantities in the bit-stream defined in the MPEG-2 standard that allow bit rate control. m_quant is the quantizer scale factor, while Qp, as mentioned, is the standard Quantization Parameter. The standard Quantization Parameter Qp determines the step size for associating the DCT transformed coefficients with a finite set of steps. Large values of Quantization Parameter Qp represent big steps that roughly approximate the spatial transform, so that most of the signal can be captured by only a few coefficients. Small values of Quantization Parameter Qp more accurately approximate the block's spatial frequency spectrum, but at the cost of more bits.

A metric to assess the level of motion content in a sequence and the level of details of the same sequence is also provided in association with the proposed method. Such a metric, a second cost function MOTION_COST, is computed starting from entities already available in the incoming bit-stream such as the motion vectors and the number of intra, P and B macroblocks of the incoming bit-stream to assess the level of motion content in the sequence. In addition, other typical metrics used in the art, like pixels/blocks/macroblock MAE (Mean Absolute Error), MSE (Mean Square Error), activity or variances could be used as well in connection with the proposed method.

It is underlined that for what concerns these metrics, and also other metrics mentioned in the foregoing and in the following, a person skilled in the art could supply different definitions, without departing substantially from the scope of the invention.

Other variables that can be introduced in the metrics could be, by way of example, the size of the motion compensated block, in case the video coding standard (like H.264) allows selecting different motion compensation bases (16x16 pixels down to 4x4 pixels).

In the present embodiment the second cost function MOTION_COST includes computing an average modulus of the motion vectors *average_MV_modulus*, a number of intra macroblocks number_of_*intra_MB,* and a number of B macroblocks *number_of_birectionally_predicted_MB* in the picture, as well as the motion entropy *motion_entropy.* Such values are combined as follows:

$$\text{MOTION\_COST} = K1*average\_MV\_modulus +$$

$$K2*number\_of\_intra\_MB +$$

$$K3*number\_of\_birectionally\_predicted\_MB +$$

$$K4*\ motion\_entropy$$

where K1, K2, K3, K4 represent constants that can assume any real value (positive or negative), including zero. Many variation are possible also on the second cost function MOTION_COST for the person skilled in the art, for instance by including other parameters extracted from the incoming bit-stream(e.g. DCT coefficient values and numbers). Such a second cost function MOTION_COST, working on already available compressed information, is computationally very inexpensive, therefore it is well suited for real-time implementation. Motion entropy *motion_entropy* is a measure of the variability of the motion vectors modulus and directions within the image. For example, for each motion vector, the absolute value of the difference in x and y direction of the vector itself with respect to all the neighbors is accumulated. These

values are summed for all the vectors in the picture. The higher the results, the more uncorrelated the vectors will be.

Further, according to the proposed method, a third cost function DETAILS_COST is computed that represents a metric for the level of details in the bit-stream; once again, such a third cost function DETAILS_COST can be computed starting from information contained in the incoming bit-stream, such as number of Discrete Cosine Transform coefficients different from zero or above a certain threshold, before or after quantization, before or after motion compensation. All other quantities already used above for the second cost function MOTION_COST can be reused, in a different fashion, for the third cost function DETAILS_COST evaluation.

In the present embodiment such a third cost function DETAILS_COST is:

$$\text{DETAILS\_COST}\ =\ J1*number\_of\_hi\_freq\_DCT\_count\ +$$
$$J2*\ number\_of\_intra\_MB +$$
$$J3*motion\_entropy$$

where again J1, J2, J3 are constants assuming real values.

*Number_of_hi_freq_DCT_count* is defined as the count in an entire frame of the number of hi-frequency Discrete Cosine Transform coefficients that are, after dequantization, higher than a certain threshold TH_DCT. The hi-frequency DCT coefficients are the Discrete Cosine Transform coefficients that come, in a zig-zag-scan order, after the $N^{th}$ position. The threshold TH_DCT and the position N are threshold values arbitrarily chosen.

In addition, as above, well-known quantities in the art can be used, such as prediction error MAE, macroblock variance or activity to be included in the above metrics.

Therefore, the proposed method makes available two metrics that allow for understanding if the content being processed has a high amount of motion, i.e. the second cost function MOTION_COST, or has many details, i.e. the third cost function DETAILS_COST.

Although it is known to provide at the receiver side, after the decoding operation and before displaying the video, means and methods to up-sample both the frame size and the frame rate, therefore reversing the action of downsampling frame size and frame rate, such means and methods however cannot recreate information lost during the down-sampling, thus the up-sampling will produce acceptable results only if in the preceding down-sample procedure it was avoided in some way to discard a too large amount of information. Typical examples of cases where the up-sampling is not effective are situations where reduced frame rate in a sequence with a great amount of motion is considered, or reduced frame size in a sequence with many details is considered.

In case no up-sampling is available in the post-processing at the display, these impairments will be even more evident. Therefore, it is crucial to correctly understand when to apply down-sampling, and of which type, spatial or temporal. In a sequence with high detail but slow motion, it is correct to reduce the frame rate; in a sequence where a great amount of chaotic motion is present, but little details (e.g. big objects bouncing around) is correct to safely down-sample image size.

The proposed method supplies an adaptive selection rule to choose the operation to perform, decrease or increase bit-rate, that is thus based on the comparison of the three cost functions identified in the foregoing:

- MOTION_COST,
- DETAILS_COST,
- QUANTIZATION_COST.

Such three cost functions are continuously recomputed and compared among each other, in order to establish which is the next action, among the possible actions, i.e. reduce frame rate, reduce frame size, increase quantization, to perform in order to adapt the output bit-rate to the actual channel condition. The action most suitable for decreasing the bandwidth needed is identified as the one involving the smaller cost according to such three cost functions.

The proposed method thus provides for comparing such three cost functions.

Assuming that the smaller cost function initially is the first cost function QUANTIZATION_COST, the quantization is increased. By keeping on quantizing, at some point of such a quantization increase, however, the first cost function QUANTIZATION_COST will become greater in value than either the second cost function MOTION_COST or the third cost function DETAILS_COST and this will trigger a change in transcoding level.

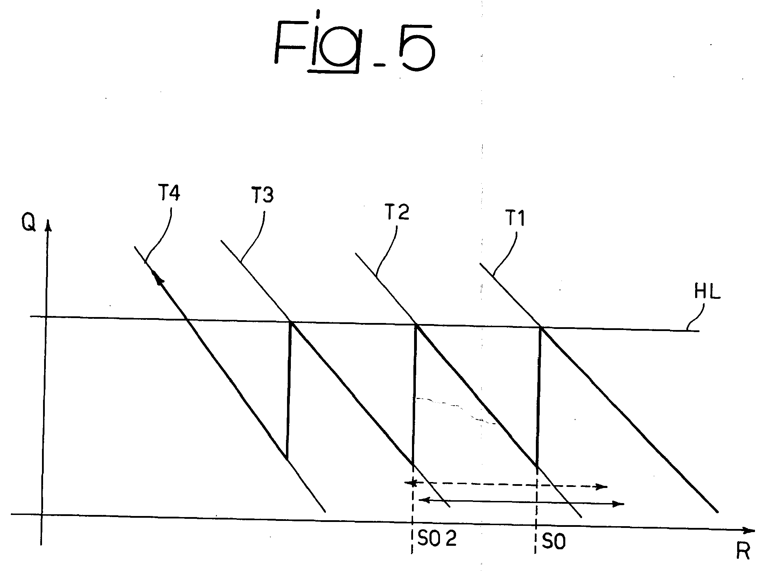

More specifically, as shown in the diagram of figure 5, where the Quantization Parameter Q is plotted against the bit-rate R, line T1 indicates adaptation to different values of bit-rate R by increasing (decreasing) the Quantization Parameter Q and maintaining the full frame rate and full frame size. Line T1 is represented as a straight line for simplicity's sake, but this does not imply necessarily a linear relationship between Quantization Parameter Q and bit-rate R.

As the Quantization Parameter Q reaches a value indicated by the horizontal line HL, where the second cost function MOTION_COST becomes smaller than the first cost function QUANTIZATION_COST, the proposed method provides for applying frame rate reduction. Line T2 indicates the corresponding reduced frame rate, full frame size quantization trend, showing that, in changing from line T1 to line T2, the value of the Quantization Parameter Q necessary for maintaining the same bit rate R drops, since the frame rate is now reduced and thus, as a consequence, the first cost function QUANTIZATION_COST drops. Such a new value assumed by the first cost function QUANTIZATION_COST, is registered as a "switch off" point SO for frame rate reduction.

In the case that the output bit-rate can be increased again because of improved bandwidth conditions on the network, the frame rate reduction will be then switched off only when the first cost function QUANTIZATION_COST will be lower or equal than such a value of "switch off" point SO. This conditions applies, if also frame size reduction, that will be now discussed, is already disabled, if it was switched on when the frame size reduction, better illustrated in the following, was on

After passing from the transcoding level indicated from line T1 to the transcoding level indicated from line T2, to reduce further the bit rate, the proposed method provides again for increasing the quantization, thus the Quantization Parameter Q and the first cost function QUANTIZATION_COST increase again.

During such an increment, the first cost function QUANTIZATION_COST will surmount also the third cost function DETAILS_COST value. In this case the proposed method provides for reducing frame size as well. The reduced frame size transcoding level is represented by line T3, while line T4 represents a reduced frame rate reduced frame size transcoding level.

Once again, after such an action is taken, the first function QUANTIZATION_COST drops, and the proposed method provides for recording this new value as a second switch off point SO2 to switch the frame size sub sampling off. In this case, third function DETAILS_COST and second function MOTION_COST costs are not compared any more, but attention will be paid only to monitor when the first cost function QUANTIZATION_COST will go below the second switch off point SO2.

The reduction schemes above illustrated can be recursive, e.g. when a resolution reduction to one fourth is already enabled and the first cost function QUANTIZATION_COST gets higher than the function DETAIL_COST, then a one sixteenth frame size reduction is enabled, and so on.

In other possible embodiments, simplified sub cases can envisage for choosing fixed quantization thresholds to switch on and off the sub-sampling, and only the values of the second cost function MOTION_COST and the third function DETAIL_COST are used to select which sub sampling to enable first.

The proposed method can additionally envisage letting the "switch off" point SO of the frame rate and the "switch off" point SO2 of size down-sampling not fixed, but instead variable, because the sequence content can vary over time, e.g. a complex scene can follow a simple one. In this case, an update of the switch off points SO and SO2 will improve visual quality. The relative position of lines T2 and T3, as indicated by the arrows in Figure 5, thus can change with respect to the stream content.

Such an update can easily be obtained by linear combinations of the "fixed" value of the switch off point SO and the variations of the functions MOTION_COST and DETAILS_COST with regards to their value when the quality switch off point was taken. An expression for the quality switch off point *QUALITY_COST_switch_off_point SO* can be:

$$
\begin{aligned}
&Current\_QUALITY\_COST\_switch\_off\_point\ SO = \\
&M1*recorded\_QUALITY\_COST\_switch\_off\_point\ + \\
&M2*(current\_VECTOR\_COST\ -\ recorded\_VECTOR\_COST)\ + \\
&M3*(current\_DETAILS\_COST\ -\ recorded\_DETAILS\_COST)
\end{aligned}
$$

The quantities with the prefix *'recorded_'* are the ones sampled when the switch on took place, while the quantities with the prefix *'current_'* are the latest computed values. M1, M2, M3 indicate integer constant values.

It must be noted that the proposed method operates without any difference both when the bit-rate must be reduced and when must be increased, adjusting the bitrate along the lines and the thresholds indicated in Figure 5. Therefore, it is not necessary to provide another method to increase the bandwidth.

The proposed method and circuit can be hardware implemented at least partially through an ASIC, e.g. by a suitable mixing of hardware and software on a embedded processor.

Consequently, without prejudice to the underlying principles of the invention, the details and the embodiments may vary, also appreciably, with reference to what has been described by way of example only, without departing from the scope of the invention as defined by the annexed claims.

**Claims**

1. A method of controlling delivery of at least one coded information stream (I') to at least one user via at least one link (20, 40) exposed to variable operating conditions, the method including the steps of:

    - monitoring the operating conditions of said at least one link (20, 40), and
    - selectively transcoding said at least one coded information stream (I') by selectively varying at least one transcoding parameter as a function of said operating conditions monitored, wherein

    said monitoring operating conditions of said at least one link includes evaluating the available bit rate (R)
    the method further comprising, upon such evaluation of the bit rate (R), evaluating a set of metrics for measuring the complexity of said coded information stream (I'), said at least transcoding parameter being selected among a quantization parameter, a resolution parameter and a frame rate parameter,
    **characterized in that** said set of metrics includes a metric of the quantization of the coded stream, a metric for the level of motion content in the coded information stream (I') and a metric for the level of details in said coded information stream (I'), each of said metrics respectively triggering the change of said quantization parameter, resolution parameter and frame rate parameter,
    said selectively varying at least one transcoding parameter includes
    varying one of said transcoding parameters to adapt to the variation of bit rate (R),
    selecting among a plurality of transcoding levels (T1, T2, T3, T4) associated to different values of quantization, resolution and frame rate, on the basis of the result of a comparison between the value taken by a first metric, taken in said set of metrics, triggering the change for the transcoding parameter that is varied to adapt to the variation of bit rate (R), against the value taken by either one of the other metrics, said selection on the basis of the result of said comparison including evaluating whether either one of the other metrics is smaller than the first metric and selecting the transcoding level (T2, T3, T4) defined by a reduction of the corresponding transcoding parameter.

2. The method of claim 1, **characterized in that** said first metric is said metric for the quantization in said coded information stream (I') and said transcoding parameter that is varied to adapt to the variation of bit rate (R) is the quantization parameter.

3. The method of any of the preceding claims, **characterized in that** said transcoding levels (T1, T2, T3, T4) include sublevels (Q).

4. The method of claim 3, **characterized in that** said sublevels (Q) are associated to different quantization parameters.

5. The method of any of the preceding claims, **characterized in that** said transcoding levels (T1, T2, T3, T4) include at least four levels **characterized by**, respectively,
full resolution, full frame rate (T1),
full resolution, reduced frame rate (T2),
reduced resolution, full frame rate (T3),
reduced resolution, reduced frame rate (T4).

6. The method of any of claims 2 to 5, **characterized in that** includes operation of comparing includes storing one or more switch-off values (SO, S02) of quantization (Q) representative of a switching among said different values of resolution and frame rate.

7. The method of claim 6, **characterized in that** said one or more switch-off values (SO, S02) include a first switch-off value (SO) for the frame rate and a second switch-off value (SO2) for the resolution and further includes updating said first switch-off value (SO) and second switch-off value (SO2) as a function of the complexity of said coded information stream (I').

8. The method of any of the preceding claims, **characterized in that** said at least one link (20, 40) is a wireless link.

9. The method of any of the preceding claims, **characterized in that** said at least one link is included in a local area network.

10. The method of any of the preceding claims, **characterized in that** said at least one link is included in a wireless LAN.

11. The method of any of the preceding claims, **characterized in that** said information stream is a media stream.

12. The method of any of the preceding claims, **characterized in that** said stream includes a video stream.

13. The method of claim 12, **characterized in that** said stream is an MPEG encoded stream.

14. A system for controlling delivery of at least one coded information stream (I') to at least one user via at least one link (20, 40) exposed to variable operating conditions, the system including:

- a controller module configured for monitoring the operating conditions of said at least one link (20, 40), and
- at least one transcoder configured for selectively transcoding said at least one coded information stream (I') by selectively varying at least one transcoding parameter as a function of said operating conditions monitored, wherein

said controller module is configured for monitoring operating conditions of said at least one link (20, 40) by evaluating the available bit rate (R) and, upon such evaluation of the bit rate (R), for evaluating a set of metrics for measuring the complexity of said coded information stream (I'), ), **characterized in that**
said set of metrics includes a metric of the quantization of the coded stream, a metric for the level of motion content in the coded information stream (I') and a metric for the level of details in said coded information stream (I'), respectively triggering the change of said quantization parameter, resolution parameter and frame rate parameter,
said at least one transcoder is configured for selectively transcoding said at least one coded information stream (I') by selecting said at least transcoding parameter among a quantization parameter, a resolution paramenter and a frame rate parameter, by varying one of said transcoding parameters to adapt to the variation of bit rate (R), selectively varying at least one transcoding parameter by selecting among a plurality of transcoding levels (T1, T2, T3, T4) defined by different values of said set of transcoding parameters associated to different values of quantization, resolution and frame rate on the basis of the result of a comparison between the value taken by a first metric, taken in said set of metrics, triggering the change for the transcoding parameter that is varied to adapt to the variation of bit rate (R), against the value taken by either one of the other metrics in said set of metrics, said set of metrics and said at least one transcoder is configured for evaluating whether either one of the other metrics is smaller than the first metric and selecting the transcoding level (T2, T3, T4) defined by a reduction of the corresponding transcoding parameter.

15. The system of claim 14, **characterized in that** said first metric is said metric for the quantization in said coded information stream (I') and said transcoding parameter that is varied to adapt to the variation of bit rate (R) is the quantization parameter.

16. The system of claim 14 or 15, **characterized in that** said transcoding levels (T1, T2, T3, T4) include sublevels (Q).

17. The system of claim 16, **characterized in that** said sublevels (Q) are associated to different quantization parameters.

18. The system of any of claims 14 to 17, **characterized in that** said transcoding levels (T1, T2, T3, T4) include at least four levels **characterized by**, respectively,
   full resolution, full frame rate (T1),
   full resolution, reduced frame rate (T2),
   reduced resolution, full frame rate (T3),
   reduced resolution, reduced frame rate (T4).

19. The system of any of claims 15 to 18, **characterized in that** said transcoder is configured for storing one or more switch-off values (SO, S02) of quantization (Q) representative of a switching among said different values of resolution and frame rate.

20. The system of claim 19, **characterized in that** said one or more switch-off values (SO, S02) include a first switch-off value (SO) for the frame rate and a second switch-off value (SO2) for the resolution and transcoder is configured further for updating said first switch-off value (SO) and second switch-off value (SO2) as a function of the complexity of said coded information stream (I').

21. The system of any of claims 14 to 20, **characterized in that** said at least one link (20, 40) is a wireless link.

22. The system of any of claims 14 to 21, **characterized in that** said at least one link is included in a local area network (20).

23. The system of claim 22, **characterized in that** said at least one link is included in a wireless LAN (20).

24. The system of any of claims 14 to 23, **characterized in that** said coded information stream (I') is a media stream.

25. The system of claim 24, **characterized in that** said coded information stream (I') includes a video stream.

26. The system of claim 25, **characterized in that** said stream (I') is an MPEG or H.264 video encoded stream.

27. A communication network including a system according to any of claims 14 to 26.

28. A computer program product loadable in the memory of at least one computer and including software code portions for performing the method of any of claims 1 to 13.


**Patentansprüche**

1. Verfahren zum Steuern des Lieferns mindestens eines kodierten Informationsstroms (I') an mindestens einen Nutzer über mindestens eine Verbindung (20, 40), die variablen Betriebsbedingungen unterliegt, wobei das Verfahren folgende Schritte beinhaltet:

   - Überwachen der Betriebsbedingungen der mindestens einen Verbindung (20, 40) und
   - selektives Transkodieren des mindestens einen kodierten Informationsstroms (I') durch selektives Variieren mindestens eines Transkodierparameters als eine Funktion der überwachten Betriebsbedingungen, wobei

das Überwachen der Betriebsbedingungen der mindestens einen Verbindung das Auswerten der verfügbaren Bitrate (R) beinhaltet, wobei das Verfahren, auf eine solche Auswertung dieser Bitrate (R) hin, ferner das Auswerten eines Satzes von Metriken zum Messen der Komplexität des kodierten Informationsstroms (I') beinhaltet, wobei der mindestens eine Transkodierparameter aus einem Quantisierungsparameter, einem Auflösungsparameter und einem Bildwechselfrequenzparameter ausgewählt wird,
**dadurch gekennzeichnet, dass** der Satz von Metriken eine Metrik der Quantisierung des kodierten Stroms, eine Metrik für das Niveau an Bewegungsinhalt in dem kodierten Informationsstrom (I') und eine Metrik für das Niveau von Einzelheiten in dem kodierten Informationsstrom (I') beinhaltet, wobei jede der Metriken die Änderung des Quantisierungsparameters bzw. des Auflösungsparameters bzw. des Bildwechselfrequenzparameters auslöst, wobei das selektive Variieren mindestens eines Transkodierparameters beinhaltet:

Variieren eines der Transkodierparameter zur Anpassung an die Variation der Bitrate (R), Auswählen aus einer Mehrzahl von Transkodierniveaus (T1, T2, T3, T4), die unterschiedlichen Werten von Quantisierung, Auflösung und Bildwechselfrequenz zugeordnet sind, auf Grundlage des Ergebnisses eines Vergleichs zwischen dem von einer ersten Metrik angenommenen Wert, die in dem Satz von Metriken genommen wird, die die Änderung für den Transkodierparameter auslöst, der zur Anpassung an die Variation der Bitrate (R) variiert wird, mit dem von einer der anderen Metriken angenommenen Wert, wobei die Auswahl auf Grundlage des Ergebnisses des Vergleichs das Auswerten, ob eine der anderen Metriken kleiner ist als die erste Metrik, und das Auswählen des Transkodierniveaus (T2, T3, T4), das durch eine Reduzierung der entsprechenden Transkodierparameter definiert ist, beinhaltet.

2. Verfahren nach Anspruch 1, **dadurch gekennzeichnet, dass** die erste Metrik die Metrik für die Quantisierung in dem kodierten Informationsstrom (I') ist und der Transkodierparameter, der zur Anpassung an die Variation der Bitrate (R) variiert wird, der Quantisierungsparameter ist.

3. Verfahren nach einem der vorhergehenden Ansprüche, **dadurch gekennzeichnet, dass** die Transkodierniveaus (T1, T2, T3, T4) Unterniveaus (Q) aufweisen.

4. Verfahren nach Anspruch 3, **dadurch gekennzeichnet, dass** die Unterniveaus (Q) unterschiedlichen Quantisierungsparametern zugeordnet sind.

5. Verfahren nach einem der vorhergehenden Ansprüche, **dadurch gekennzeichnet, dass** die Transkodierniveaus (T1, T2, T3, T4) mindestens vier Niveaus aufweisen, **gekennzeichnet durch** volle Auflösung, volle Bildwechselfrequenz (T1), volle Auflösung, reduzierte Bildwechselfrequenz (T2), reduzierte Auflösung, volle Bildwechselfrequenz (T3), reduzierte Auflösung, reduzierte Bildwechselfrequenz (T4).

6. Verfahren nach einem der Ansprüche 2 bis 5, **dadurch gekennzeichnet, dass** der Vergleichsvorgang das Speichern eines oder mehrerer Ausschaltwerte (SO, S02) von Quantisierung (Q) beinhaltet, die repräsentativ für ein Schalten unter unterschiedlichen Werten von Auflösung und Bildwechselfrequenz sind.

7. Verfahren nach Anspruch 6, **dadurch gekennzeichnet, dass** der eine oder die mehreren Ausschaltwerte (SO, S02) einen ersten Ausschaltwert (SO) für die Bildwechselfrequenz und einen zweiten Ausschaltwert (SO2) für die Auflösung aufweisen, und es ferner das Aktualisieren des ersten Ausschaltwerts (SO) und des zweiten Ausschaltwerts (SO2) als eine Funktion der Komplexität des kodierten Informationsstroms (I') beinhaltet.

8. Verfahren nach einem der vorhergehenden Ansprüche, **dadurch gekennzeichnet, dass** die mindestens eine Verbindung (20, 40) eine drahtlose Verbindung ist.

9. Verfahren nach einem der vorhergehenden Ansprüche, **dadurch gekennzeichnet, dass** die mindestens eine Verbindung in einem lokalen Netzwerk enthalten ist.

10. Verfahren nach einem der vorhergehenden Ansprüche, **dadurch gekennzeichnet, dass** die mindestens eine Verbindung in einem drahtlosen LAN enthalten ist.

11. Verfahren nach einem der vorhergehenden Ansprüche, **dadurch gekennzeichnet, dass** der Informationsstrom ein Medienstrom ist.

12. Verfahren nach einem der vorhergehenden Ansprüche, **dadurch gekennzeichnet, dass** der Strom einen Videostrom aufweist.

**13.** Verfahren nach Anspruch 12, **dadurch gekennzeichnet, dass** der Strom ein MPEGkodierter Strom ist.

**14.** System zum Steuern des Lieferns mindestens eines kodierten Informationsstroms (I') an mindestens einen Nutzer über mindestens eine Verbindung (20, 40), die variablen Betriebsbedingungen unterliegt, wobei das System aufweist:

- ein Steuermodul, das zum Überwachen der Betriebsbedingungen der mindestens einen Verbindung (20, 40) konfiguriert ist, und
- mindestens einen Transcoder, der zum selektiven Transkodieren des mindestens einen kodierten Informationsstroms (I') durch selektives Variieren mindestens eines Transkodierparameters als eine Funktion der überwachten Betriebsbedingungen konfiguriert ist, wobei

das Steuermodul zum Überwachen der Betriebsbedingungen der mindestens einen Verbindung (20, 40) durch Auswerten der verfügbaren Bitrate (R) und, auf eine solche Auswertung dieser Bitrate (R) hin, zum Auswerten eines Satzes von Metriken zum Messen der Komplexität des kodierten Informationsstroms (I') konfiguriert ist, **dadurch gekennzeichnet, dass** der Satz von Metriken eine Metrik der Quantisierung des kodierten Stroms, eine Metrik für das Niveau an Bewegungsinhalt in dem kodierten Informationsstrom (I') und eine Metrik für das Niveau von Einzelheiten in dem kodierten Informationsstrom (I') aufweist, die die Änderung des Quantisierungsparameters bzw. des Auflösungsparameters bzw. des Bildwechselfrequenzparameters auslösen, wobei der mindestens eine Transcoder dafür konfiguriert ist, den mindestens einen kodierten Informationsstrom (I') durch Auswählen des mindestens einen Transkodierparameters aus einem Quantisierungsparameter, einem Auflösungsparameter und einem Bildwechselfrequenzparameter durch Variieren eines der Transkodierparameter zur Anpassung an die Variation der Bitrate (R) selektiv zu transkodieren, mindestens einen Transkodierparameter durch Auswählen aus einer Mehrzahl von Transkodierniveaus (T1, T2, T3, T4), die durch unterschiedliche Werte des Satzes von Transkodierparametern definiert sind, die unterschiedlichen Werten von Quantisierung, Auflösung und Bildwechselfrequenz zugeordnet sind, auf Grundlage des Ergebnisses eines Vergleichs zwischen dem von einer ersten Metrik angenommenen Wert, die in dem Satz von Metriken genommen wird, die die Änderung für den Transkodierparameter auslöst, der zur Anpassung an die Variation der Bitrate (R) variiert wird, mit dem von einer der anderen Metriken in dem Satz von Metrik angenommenen Wert selektiv zu variieren, wobei der Satz von Metriken und der mindestens eine Transcoder dafür konfiguriert sind, auszuwerten, ob eine der anderen Metriken kleiner ist als die erste Metrik, und das Transkodierniveau (T2, T3, T4) auszuwählen, das durch eine Reduzierung der entsprechenden Transkodierparameter definiert ist.

**15.** System nach Anspruch 14, **dadurch gekennzeichnet, dass** die erste Metrik die Metrik für die Quantisierung in dem kodierten Informationsstrom (I') ist und der Transkodierparameter, der zur Anpassung an die Variation der Bitrate (R) variiert wird, der Quantisierungsparameter ist.

**16.** System nach Anspruch 14 oder 15, **dadurch gekennzeichnet, dass** die Transkodierniveaus (T1, T2, T3, T4) Unterniveaus (Q) aufweisen.

**17.** System nach Anspruch 16, **dadurch gekennzeichnet, dass** die Unterniveaus (Q) unterschiedlichen Quantisierungsparametern zugeordnet sind.

**18.** System nach einem der Ansprüche 14 bis 17, **dadurch gekennzeichnet, dass** die Transkodierniveaus (T1, T2, T3, T4) mindestens vier Niveaus aufweisen, **gekennzeichnet durch** volle Auflösung, volle Bildwechselfrequenz (T1), volle Auflösung, reduzierte Bildwechselfrequenz (T2), reduzierte Auflösung, volle Bildwechselfrequenz (T3), reduzierte Auflösung, reduzierte Bildwechselfrequenz (T4).

**19.** System nach einem der Ansprüche 15 bis 18, **dadurch gekennzeichnet, dass** der Transcoder zum Speichern eines oder mehrerer Ausschaltwerte (SO, S02) der Quantisierung (Q) konfiguriert ist, die repräsentativ für ein Schalten unter den unterschiedlichen Werten von Auflösung und Bildwechselfrequenz sind.

**20.** System nach Anspruch 19, **dadurch gekennzeichnet, dass** der eine oder die mehreren Ausschaltwerte (SO, S02) einen ersten Ausschaltwert (SO) für die Bildwechselfrequenz und einen zweiten Ausschaltwert (SO2) für die Auflösung aufweisen und der Transcoder ferner zum Aktualisieren des ersten Ausschaltwerts (SO) und des zweiten Ausschaltwerts (SO2) als eine Funktion der Komplexität des kodierten Informationsstroms (I') konfiguriert ist.

**21.** System nach einem der Ansprüche 14 bis 20, **dadurch gekennzeichnet, dass** die mindestens eine Verbindung (20, 40) eine drahtlose Verbindung ist.

**22.** System nach einem der Ansprüche 14 bis 21, **dadurch gekennzeichnet, dass** die mindestens eine Verbindung in einem lokalen Netzwerk (20) enthalten ist.

**23.** System nach Anspruch 22, **dadurch gekennzeichnet, dass** die mindestens eine Verbindung in einem drahtlosen LAN (20) enthalten ist.

**24.** System nach einem der Ansprüche 14 bis 23, **dadurch gekennzeichnet, dass** der kodierte Informationsstrom (I') ein Medienstrom ist.

**25.** System nach Anspruch 24, **dadurch gekennzeichnet, dass** der kodierte Informationsstrom (I') einen Videostrom aufweist.

**26.** System nach Anspruch 25, **dadurch gekennzeichnet, dass** der Strom (I') ein MPEG-oder H.264-video-kodierter Strom ist.

**27.** Kommunikationsnetzwerk, das ein System nach einem der Ansprüche 14 bis 26 aufweist.

**28.** Computerprogrammprodukt, das in den Speicher mindestens eines Computers geladen werden kann und Softwarecodeteile zum Ausführen des Verfahrens nach einem der Ansprüche 1 bis 13 aufweist.

## Revendications

**1.** Procédé pour contrôler la fourniture d'au moins un flux d'informations codées (I') à au moins un utilisateur par l'intermédiaire d'au moins une liaison (20, 40) exposée à des conditions de fonctionnement variables, le procédé comprenant les étapes suivantes :

   - surveiller les conditions de fonctionnement de ladite au moins une liaison (20, 40), et
   - transcoder sélectivement ledit au moins un flux d'informations codées (I') en faisant varier sélectivement au moins un paramètre de transcodage en fonction des conditions de fonctionnement surveillées, dans lequel

la surveillance des conditions de fonctionnement de ladite au moins une liaison comprend l'évaluation du débit binaire disponible (R),
le procédé comprenant en outre, lors d'une telle évaluation du débit binaire (R), l'évaluation d'un ensemble de métriques pour mesurer la complexité du flux d'informations codées (I'), ledit au moins un paramètre de transcodage étant sélectionné parmi un paramètre de quantification, un paramètre de résolution et un paramètre de fréquence de trames,
**caractérisé en ce que** l'ensemble de métriques comprend une métrique de la quantification du flux codé, une métrique pour le niveau de contenu de mouvement dans le flux d'informations codées (I') et une métrique pour le niveau de détail dans le flux d'informations codées (I'), chacune des métriques déclenchant respectivement le changement du paramètre de quantification, du paramètre de résolution et du paramètre de fréquence de trames, la variation sélective d'au moins un paramètre de transcodage comprenant :

   faire varier l'un des paramètres de transcodage pour s'adapter à la variation du débit binaire (R),
   faire une sélection parmi une pluralité de niveaux de transcodage (T1, T2, T3, T4) associés à différentes valeurs de quantification, de résolution et de fréquence de trames, sur la base du résultat d'une comparaison entre la valeur prise par une première métrique, prise dans l'ensemble de métriques, déclenchant le changement pour le paramètre de transcodage qu'on fait varier pour s'adapter à la variation du débit binaire (R), et la valeur prise par l'une ou l'autre des autres métriques, la sélection sur la base du résultat de la comparaison comprenant une évaluation pour déterminer si l'une ou l'autre des autres métriques est inférieure à la première métrique, et la sélection du niveau de transcodage (T2, T3, T4) défini par une réduction du paramètre de transcodage correspondant.

**2.** Procédé selon la revendication 1, **caractérisé en ce que** la première métrique est la métrique de la quantification dans le flux d'informations codées (I'), et le paramètre de transcodage qu'on fait varier pour s'adapter à la variation du débit binaire (R) est le paramètre de quantification.

**3.** Procédé selon l'une quelconque des revendications précédentes, **caractérisé en ce que** les niveaux de transcodage (T1, T2, T3, T4) comprennent des sous-niveaux (Q).

**4.** Procédé selon la revendication 3, **caractérisé en ce que** les sous-niveaux (Q) sont associés à des paramètres de quantification différents.

**5.** Procédé selon l'une quelconque des revendications précédentes, **caractérisé en ce que** les niveaux de transcodage (T1, T2, T3, T4) comprennent au moins quatre niveaux **caractérisés par**, respectivement,
pleine résolution, plein débit binaire (T1),
pleine résolution, fréquence de trames réduite (T2),
résolution réduite, pleine fréquence de trames (T3),
résolution réduite, fréquence de trames réduite (T4).

**6.** Procédé selon l'une quelconque des revendications 2 à 5, **caractérisé en ce que** l'opération de comparaison comprend la mémorisation d'une ou plusieurs valeurs de commutation de coupure (SO, S02) de quantification (Q) représentatives d'une commutation entre différentes valeurs de résolution et de fréquence de trames.

**7.** Procédé selon la revendication 6, **caractérisé en ce que** lesdites une ou plusieurs valeurs de commutation de coupure (SO, S02) comprennent une première valeur de commutation de coupure (SO) pour la fréquence de trames et une deuxième valeur de commutation de coupure (SO2) pour la résolution, et comprenant en outre une mise à jour de la première valeur de commutation de coupure (SO) et de la deuxième valeur de commutation de coupure (SO2) en fonction de la complexité du flux d'information codé (I').

**8.** Procédé selon l'une quelconque des revendications précédentes, **caractérisé en ce que** ladite au moins une liaison (20, 40) est une liaison sans fil.

**9.** Procédé selon l'une quelconque des revendications précédentes, **caractérisé en ce que** ladite au moins une liaison est incluse dans un réseau local.

**10.** Procédé selon l'une quelconque des revendications précédentes, **caractérisé en ce que** ladite au moins une liaison est incluse dans un LAN sans fil.

**11.** Procédé selon l'une quelconque des revendications précédentes, **caractérisé en ce que** le flux d'informations est un flux de média.

**12.** Procédé selon l'une quelconque des revendications précédentes, **caractérisé en ce que** le flux comprend un flux de vidéo.

**13.** Procédé selon la revendication 12, **caractérisé en ce que** le flux est un flux codé MPEG.

**14.** Système pour contrôler la fourniture d'au moins un flux d'informations codées (I') à au moins un utilisateur par l'intermédiaire d'au moins une liaison (20, 40) exposée à des conditions de fonctionnement variable, le système comprenant :

    - un module contrôleur agencé pour surveiller les conditions de fonctionnement de ladite au moins une liaison (20, 40), et
    - au moins un transcodeur agencé pour transcoder sélectivement ledit au moins un flux d'informations codées (I') en faisant varier sélectivement au moins un paramètre de transcodage en fonction des conditions de fonctionnement surveillées, dans lequel

le module contrôleur est agencé pour surveiller des conditions de fonctionnement de ladite au moins une liaison (20, 40) en évaluant le débit binaire disponible (R) et, lors d'une telle évaluation du débit binaire (R), pour évaluer un ensemble de métriques pour mesurer la complexité du flux d'informations codées (I'), **caractérisé en ce que** l'ensemble de métriques comprend une métrique de la quantification du flux codé, une métrique pour le niveau de contenu de mouvement dans le flux d'informations codées (I') et une métrique pour le niveau de détail dans le flux d'informations codées (I'), déclenchant respectivement le changement du paramètre de quantification, du paramètre de résolution et du paramètre de fréquence de trames,
ledit au moins un transcodeur est agencé pour transcoder sélectivement ledit au moins un flux d'informations codées (I') en sélectionnant ledit au moins un paramètre de transcodage parmi un paramètre de quantification, un paramètre de résolution et un paramètre de fréquence de trames, en faisant varier l'un des paramètres de transcodage pour s'adapter à la variation du débit binaire (R), en faisant varier sélectivement au moins un paramètre de transcodage en faisant une sélection parmi une pluralité de niveaux de transcodage (T1, T2, T3, T4) définis par différentes valeurs de l'ensemble de paramètres de transcodage associées à différentes valeurs de quantification, de résolution et de fréquence de trames sur la base du résultat d'une comparaison entre la valeur prise par la première métrique, prise dans l'ensemble de métriques, déclenchant le changement pour le paramètre de transcodage qu'on fait varier pour s'adapter à la variation du débit binaire (R), et la valeur prise par un l'une ou l'autre des autres métriques dans ledit ensemble de métriques, l'ensemble de métriques et ledit au moins un transcodeur est agencé pour évaluer si l'une ou l'autre des autres métriques est inférieure à la première métrique et pour sélectionner le niveau de transcodage (T2, T3, T4) défini par une réduction du paramètre de transcodage correspondant.

15. Système selon la revendication 14, **caractérisé en ce que** la première métrique est la métrique de la quantification dans le flux d'information codées (I'), et le paramètre de transcodage qu'on fait varier pour s'adapter à la variation du débit binaire (R) est le paramètre de quantification.

16. Système selon la revendication 14 ou 15, **caractérisé en ce que** les niveaux de transcodage (T1, T2, T3, T4) comprennent des sous-niveaux (Q).

17. Système selon la revendication 16, **caractérisé en ce que** les sous-niveaux (Q) sont associés à des paramètres de quantification différents.

18. Système selon l'une quelconque des revendications 14 à 17, **caractérisé en ce que** les niveaux de transcodage (T1, T2, T3, T4) comprennent au moins quatre niveaux **caractérisés par** respectivement,
pleine résolution, plein débit binaire (T1),
pleine résolution, fréquence de trames réduite (T2),
résolution réduite, pleine fréquence de trames (T3),
résolution réduite, fréquence de trames réduite (T4).

19. Système selon l'une quelconque des revendications 15 à 18, **caractérisé en ce que** le transcodeur est agencé pour mémoriser une ou plusieurs valeurs de commutation de coupure (SO, S02) de quantification (Q) représentatives d'une commutation entre les différentes valeurs de résolution et de fréquence de trames.

20. Système selon la revendication 19, **caractérisé en ce que** lesdites une ou plusieurs valeurs de commutation de coupure (SO, S02) comprennent une première valeur de commutation de coupure (SO) pour la fréquence de trames et une deuxième valeur de commutation de coupure (SO2) pour la résolution, et le transcodeur est agencé en outre pour mettre à jour la première valeur de commutation de coupure (SO) et la deuxième valeur de commutation de coupure (SO2) en fonction de la complexité du flux d'informations codées (I').

21. Système selon l'une quelconque des revendications 14 à 20, **caractérisé en ce que** ladite au moins une liaison (20, 40) est une liaison sans fil.

22. Système selon l'une quelconque des revendications 14 à 21, **caractérisé en ce que** ladite au moins une liaison est incluse dans un réseau local (20).

23. Système selon la revendication 22, **caractérisé en ce que** ladite au moins une liaison est incluse dans un LAN sans fil (20).

24. Système selon l'une quelconque des revendications 14 à 23, **caractérisé en ce que** le flux d'informations codées (I') est un flux de média.

25. Système selon la revendication 24, **caractérisé en ce que** le flux d'informations codées (I') comprend un flux de vidéo.

26. Système selon la revendication 25, **caractérisé en ce que** le flux (I') est un flux codé de vidéo MPEG ou H.264.

27. Réseau de communication comprenant un système selon l'une quelconque des revendications 14 à 26.

28. Produit programme d'ordinateur chargeable dans la mémoire d'au moins un ordinateur et comprenant des portions de code de logiciel pour réaliser le procédé de l'une quelconque des revendications 1 à 13.

Fig_1

EP 1 615 447 B1

Fig. 2

Fig-3

Fig - 4

EP 1 615 447 B1

# Fig_5

**EP 1 615 447 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03047264 A
- WO 03047265 A
- EP 1374593 A
- EP 1231794 A
- EP 1294195 A
- EP 04007275 A
- EP 03002443 A
- WO 02080518 A

### Non-patent literature cited in the description

- **YONGQING LIANG.** A new content-based hybrid video transcoding method. *International Conference on Image Processing 2001 Proceedings,* vol. 1 (8), 429-432